Europäisches Patentamt

European Patent Office

Office européen des brevets

(11) Publication number: **0 218 043**
A1

(12) # EUROPEAN PATENT APPLICATION

(21) Application number: **86111054.2**

(51) Int. Cl.⁴: **B 29 C 41/08**

(22) Date of filing: **09.08.86**

(30) Priority: **13.08.85 JP 177882/85**

(43) Date of publication of application: **15.04.87**
**Bulletin 87/16**

(84) Designated Contracting States: **DE FR GB IT**

(71) Applicant: **TOKAI CHEMICAL INDUSTRIES, LTD., 4203-1, Shimokosuge Kitatoyama, Komaki City Aichi Prefecture (JP)**

(72) Inventor: **Matsuda, Tomonori, 8-7-1, Chuoudai, Kasugai City§Aichi Pref. (JP)**
Inventor: **Minamida, Tsugio, 72-24, Shimobudai, Inuyama City§Aichi Pref. (JP)**

(74) Representative: **Blumbach Weser Bergen Kramer Zwirner Hoffmann Patentanwälte, Radeckestrasse 43, D-8000 München 60 (DE)**

(54) **Powder slush molding method.**

(57) The powder slush molding method comprises a melting step of forming a molten resin film on a mold surface of a heated slush mold: a powder removing step of removing unmelted powder slush material from the mold surface; a heat retaining step of hermetically sealing the mold surface for a predetermined period of time, allowing the adhered unmelted powder slush to be melted by the remaining heat of the slush mold; a cooling step of cooling the molten resin film; and a taking-out step of separating the film-like molding from the mold surface.

In the heat retaining step, the hermetic sealing of the mold surface can be effected by using a mold surface cover member (20) a powder slush material supply vessel, a feed material recovering vessel or the like.

TITLE OF THE INVENTION

Powder Slush Molding Method

BACKGROUND OF THE INVENTION

Field of the Invention

The present invention relates to an improvement of a powder slush molding method utilized in the production of a surface skin of an automobile instrument panel or the like.

Description of the Prior Art

According to a conventional powder slush molding method, a powder slush material is fed to a mold surface of a heated slush mold, allowing it to melt and adhere to the mold surface, to obtain a molten resin film having a predetermined thickness (melting step) and thereafter the mold is cooled (cooling step) to obtain a film-like molding. This powder slush molding method has been used, for example, in the production of a surface skin of a vehicular interior decorative material.

According to the prior art, in the case where unmelted powder slush material remains on the mold surface in the above melting step, the mold surface is turned downward, thereby allowing such an unmelted powder slush material to drop naturally by virtue of gravity, to remove it (powder removing step).

However, in the above melting step, since the

1

molten resin film is in the state of a viscous liquid, the unmelted powder slush material may adhere thereto and remain without dropping. Further in some particular slush mold shape, the powder slush material is prevented from dropping, resulting in formation of a powder heap. And if the heating is stopped in such a state, the molten resin film will solidify successively from its surface in contact with the air, with the unmelted powder slush material adhered thereto.

The film-like molding thus obtained has the powder slush material adhered to its surface and this adhered powder slush material dose not contribute at all to the improvement of performance of the film-like molding, that is, a wasteful consumption of the feed powder slush material results.

Further, in the case of bonding the film-like molding to a core material (normally semirigid polyurethan foam etc.) of the instrument panel, for example, the adhesion is deteriorated by the adhered powder.

According to a conventional method for such inconveniences, the heating is continued until the unmelted powder slush material melts completely after the powder removing step. For example, however, when the heating is done with hot air from the reverse face of the slush mold, heat is transferred through the molten resin film to the adhered powder slush material,

2

so the heat efficiency is poor and a large amount of energy is required. Further, if the heating temperature is increased for the acceleration of melting, a thermal decomposition of the molten resin film will begin to take place.

SUMMARY OF THE INVENTION

It is an object of the present invention to provide a powder slush molding method capable of reducing the total quantity of heat required for powder slush molding.

It is a further object of the present invention to provide a powder slush molding method capable of melting a powder slush material uniformly.

These and other objects have been attained by the method which comprises a melting step of feeding a powder slush material onto a mold surface of a heated slush mold and forming a molten resin film on the mold surface; a powder removing step of removing unmelted powder slush material from the mold surface; a cooling step of cooling the molten resin film to solidify the resin to obtain a film-like molding; and a taking-out step of separating the film-like molding from the mold surface, and is characterized in that between the powder removing step and the cooling step there is provided a heat retaining step of hermetically sealing the opening of the slush mold for a predetermined period of time,

3

allowing the adhered unmelted powder slush to be melted by the remaining heat of the slush mold.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figs.1 to 3 are schematic cross sectional views showing a melting step. In Fig.1 a slush mold 1 is heated within a gas circulating oven 100. In Fig.2 the slush mold 1 is coupled integrally with a powder supply vessel 3. In Fig.3 the slush mold 1 is turned over with the angle of 180° together with a powder supply vessel 3.

Fig.4 is a schematic cross sectional view showing a powder removing step.

Fig.5 is a schematic cross sectional view showing a heat retaining step.

Fig.6 is a schematic cross sectional view showing a cooling step.

Fig.7 is a schematic cross sectional view showing a taking-out step.

Fig.8 is a perspective view of the slush mold.

Fig.9 is a schematic cross sectional view showing a heat retaining step of another example.

DETAILED DESCRIPTION OF THE INVENTION

In the melting step of the powder slush molding method of the present invention, a slush mold is heated and a powder slush material is fed onto the heated slush mold surface to form a molten resin film on the mold surface.

As the slush mold used in this step, a conventional slush mold can be used without any modifications. For example, in this conventional slush mold, hot air, flame, and a heat transfer medium in the state of a fluidized bed or a heat transfer medium in the state of a high-temperature liquid contact the slush mold from the reverse face thereof. In this case, the mold is heated from the reverse face.

A powder slush material is fed to the mold surface, and upon contact of the powder slush material with the mold surface, the powder slush material is melted by the heat of the mold surface to form a molten resin film. Preferably, the slush mold is of the type in which the mold surface is turned over up and down. That is, in feeding the powder slush material, the mold surface is turned upward, thereby permitting the powder slush to be dropped onto the mold surface by virtue of gravity. On the other hand, in removing the powder, the mold surface is turned downward, thereby allowing an excess powder slush material to drop. The powder slush material may be fed to the mold surface in the form of a fluidized bed. In this case, the mold surface may be turned downward.

The thickness of the molten resin film formed on the mold surface can be adjusted by controlling time for feeding and for heating. In the case where a thin resin film suffices for the purpose, the feeding time and heating time of the powder slush material are shortened, while when a thick resin film is needed, the feeding time and heating time of the powder slush material are made long, thereby allowing a larger amount of the powder slush material to be melted.

The next powder removing step is for removing the excess unmelted powder slush material remaining on the mold surface. The unmelted powder slush material thus removed is generally recovered into a feed material recovering vessel for its recycling.

The excess powder slush material remaining in an unmelted state on the slush mold surface can be removed by natural dropping, for example by turning the mold surface downward. Such an unmelted powder slush material can be removed also by blowing air or the like against it. On the other hand, in the case of feeding the powder slush material in the form of a fluidized bed, it can be removed by stopping a gaseous jet which forms the fluidized bed. This powder removing step may be performed simultaneously with the melting step, or may be done after the melting step is finished and the heating is discontinued. In the latter case, the powder removing step may be carried out simultaneously with the later-described heat retaining step.

It is desirable that the powder removing step be performed under rocking motion of the slush mold. This is because even if there is a portion which prevents the dropping of unmelted powder slush material, such as a recess in the mold surface, dropping of such powder slush material can be effected by the rocking motion.

The greatest feature of the present invention is that a heat retaining step is performed after or simultaneously with the powder removing step.

The heat retaining step is carried out by hermetically sealing the slush mold surface for a certain time. More specifically, the cooling of the mold surface and the molten resin film formed thereon is delayed by a hermetic sealing of the opening of the slush mold, allowing the unmelted residual powder slush material adhered to the molten resin film to be melted by the heat of the slush mold and the molten resin film. While the opening of the slush mold is hermetically sealed, the heating of the slush mold may be continued, but from the aspect of energy it is desirable to effect the hermetic sealing in a discontinued state of the heating and thereby utilize the remaining heat.

The opening of the slush mold may be hermetically sealed with a powder slush material supply vessel or with a feed material recovering vessel which receives the dropping powder slush material during the powder removing step. In some cases, the powder slush material supply vessel and the feed material recovering vessel used here are the same. In the case of using such a feed material recovering vessel, the heat retaining step can be performed simultaneously with or continuously after the powder removing step and it becomes possible to diminish the loss of heat. Alternatively, the opening of the slush mold may be hermetically sealed with a cover member or the like. As long as the cover member covers the opening of the slush mold, the cover member is not especially limited in its shape, material and the like. For example, the cover member may have a plate shape.

For example, immediately after the powder removing step, the opening of the slush mold may be hermetically sealed with the cover member. In this case, the powder slush material supply vessel or the like can be utilized in the next step, and therefore a good efficiency is obtained.

It is desirable that the cover member or the like used for the hermetic sealing have heat insulating

8

property. When the cover member have heat insulating property, the cooling of the molten resin film can be further delayed, and the unmelted residual powder slush material adhered to the molten resin film can be melted easily.

The duration of the hermetic sealing of the opening of the slush mold is determined appropriately according to the melting temperature and amount of the adhered unmelted powder slush material or the amount of heat loss during the heat retaining step.

The cooling step is for cooling the molten resin film formed on the slush mold surface to obtain a film-like molding. Like the prior art, cooling in this invention can be done by using air, water, or any other suitable cooling media. In order that the molding can be taken out easily, it is necessary to effect the cooling to the extent that the resin film portion in direct contact with the slush mold surface is also solidified almost completely.

The taking-out step is for separating the solidified film-like molding from the mold surface. In this step, usually one end of the film-like molding is picked out and separated manually. This step is basically the same as the conventional separating step.

After the film-like molding is obtained, the powder slush mold is heated again and the next molding step of feeding the powder slush material to the mold surface is repeated.

According to the molding method of the present invention, the unmelted powder slush material adhered to the molten resin film is melted by the remaining heat of the slush mold and the molten resin film during the heat retaining step and becomes integral with the molten resin film, whereby a molding which is wholly uniform and has a good surface condition can be easily obtained.

In the heat retaining step, the unmelted powder slush material can be melted by utilizing the remaining heat even without heating the slush mold. Consequently, energy saving can be attained to a greater extent than in the prior art.

Moreover, if the slush mold is rocked during the powder removing step, it becomes possible to remove even the unmelted powder slush material remaining in a recess or the like, thereby making it possible to reduce the amount of unmelted powder slush material adhered to the molten resin film. Consequently, the time required for the heat retaining step can be shortened, that is, a high efficiency is attained.

Moreover, if the heat retaining step is performed while the opening of the slush mold is hermetically sealed using the feed material recovering vessel, it can be effected simultaneously with or continuously after the powder removing step.

Consequently, the loss of heat can be diminished and the time required for the heat retaining step can be shortened. Additionally, it is not necessary to produce a cover member separately, thus making it possible to prevent the increase in the number of working steps.

On the other hand, if the heat retaining step is performed while the opening of the slush mold is hermetically sealed using the cover member, the feed material recovering vessel or the like can be utilized in the powder removing step of another powder slush molding, and therefore a good efficiency is obtained.

DESCRIPTION OF THE PREFERRED EMBODIMENT

Having generally described this invention, a further understanding can be obtained by reference to certain specific embodiments which are provided herein for purposes of illustration only and are not intended to be limiting unless otherwise specified.

Example 1

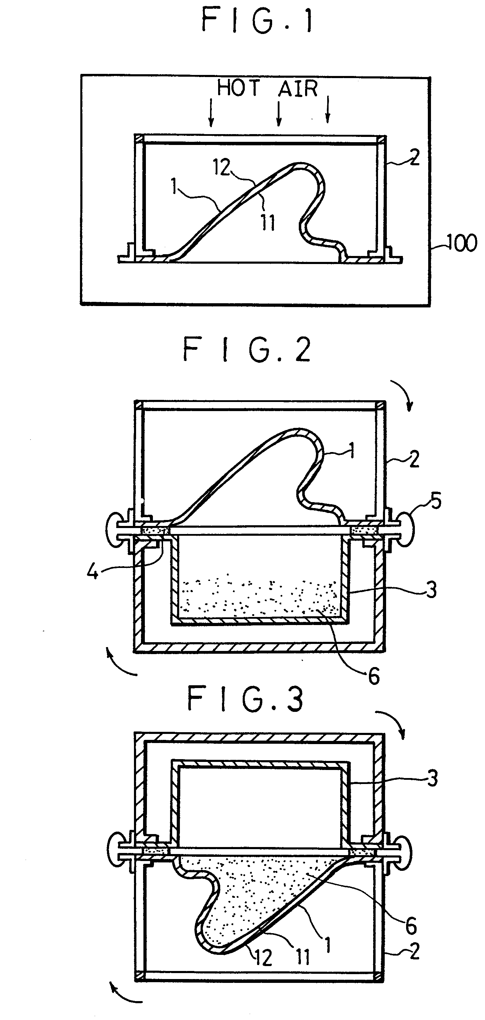

Figs.1 to 8 illustrate processing steps of a molding method according to an embodiment of the present invention. A slush mold 1 used in this embodiment is held by a lower end face of a frame 2 as shown in Fig.8. The slush mold 1 has an average thickness of 3.5 mm and is made of nickel.

( a melting step )

First, a melting step is shown in Figs.1 and

11

0218043

2, in which the slush mold 1 is disposed within a gas circulating oven 100 so that a mold surface 11 faces downward. The slush mold 1 is heated to 240 $^\circ$C by blowing hot air held at 350$^\circ$C against the slush mold 1 from a reverse face 12 of the mold 1 for 4 minutes.

Then, as shown in Fig.2, the heated slush mold 1, together with the frame 2, is coupled integrally with a powder supply vessel 3 by means of clamps 5 through a heat insulating seal material 4, and thereafter rotated. Fig.3 shows the powder supply vessel 3 and the slush mold 1 positioned top and bottom, respectively, when rotated at an angle of 180$^\circ$. Therefore, a powder slush material 6 composed of polyvinyl chloride resin compound placed in the powder supply vessel 3 drops naturally and contacts the mold surface 11, whereupon the powder slush material 6 begins to melt. And the slush mold 1, which coupled integrally with the powder supply vessel 3, is rotated clockwise and counterclockwise several times respectively. Therefore, the powder slush material is supplied to all the surfaces of the slush mold and a molten resin film having a uniform thickness is obtained.

( a powder removing step )

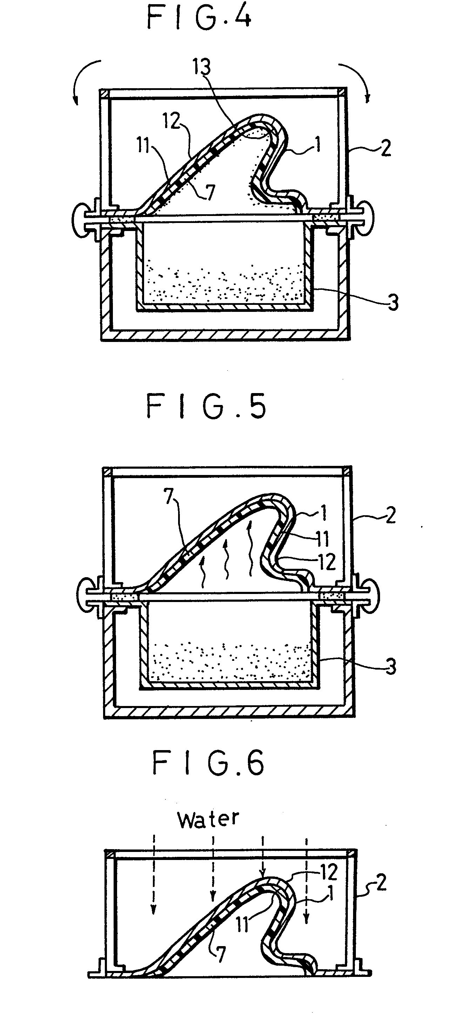

Then, as shown in Fig.4, the slush mold 1 is turned over together with the powder supply vessel 3, so that the mold surface 11 faces downward. In this state,

12

the slush mold 1 is rocked several times, whereby the unmelted powder slush material remaining in a recess 13 of the mold surface 11 drops into the powder supply vessel 3.

( a heat retainig step )

After dropping of the excess unmelted powder slush material, the slush mold 1 is held for about 10 seconds in its coupled state with the powder supply vessel 3 as shown in Fig.5. In this case, since the slush mold 1 and the powder supply vessel 3 are in a hermetically sealed state, the heated air in the slush mold 1 is not cooled directly by the air at room temperature outside the slush mold 1. And at the same time the heated air in the slush mold 1 moves upward by virtue of convection, whereby a molten resin film 7 formed on the mold surface 11 is prevented from being cooled and the melting of the adhered unmelted powder slush material is accelerated. In this embodiment, the heat retaining is continued for about 10 seconds, whereby the unmelted powder slush material is melted almost completely and becomes integral with the molten resin film 7.

( a cooling step )

When the unmelted powder slush material has been melted completely by the remaining heat and the composition of the molten resin film 7 has become uniform, the slush mold 1 is separated from the powder supply vessel 3 together with the frame 2 and then cooled with water shower from the reverse face 12 as shown in Fig.6. ( a taking-out step )

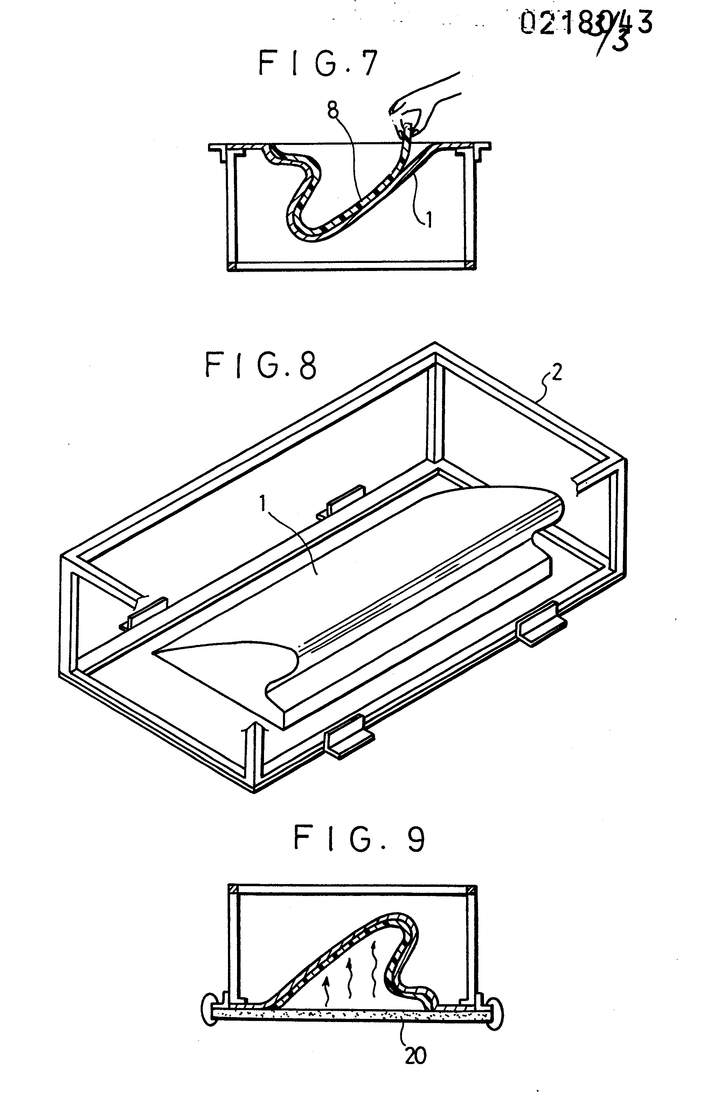

When the slush mold 1 has been cooled to about ~70°C, a film-like molding 8 is taken out manually in the taking-out step shown in Fig.7. The film-like molding 8 proved to have an average film thickness of about 1.0 mm, had an almost uniform thickness and a uniform composition free from adhesion of powder.

In this embodiment, by merely coupling the slush mold 1 with the powder supply vessel 3, the unmelted powder slush material adhering to the molten resin film was melted by the remaining heat of the slush mold 1 to give a uniform molten resin film. Therefore, the heat energy is utilized effectively and it is possible to attain energy saving.

Example 2

In this embodiment, each of the steps until a powder removing step completes and after a cooling step begins is the same as in Example 1.

After dropping the excess unmelted powder slush material, the powder supply vessel was detached from a slush mold, and the slush mold was hermetically sealed with a cover member 20 having heat insulating property as shown in Fig.9. Then, the slush mold was moved to a cooling step. On the way to the cooling step

14

after about 10 seconds from the hermetical sealing, the slush mold was turned over 180° to prevent a molten resin film from sagging. After about 20 seconds from the hermetical sealing, the cover member 20 was separated from the slush mold, and the slush mold was cooled with water shower, and then a taking-out step was carried out as usual. A film-like molding taken out in the taking-out step had an almost uniform thickness and a uniform composition free from adhesion of powder.

Namely in this embodiment, the unmelted powder slush material adhered to the molten resin film was melted by a remaining heat of the slush mold, and a heat retaining step could be carried out even during moving the slush mold to the position of a cooling step. Accordingly, the time taken from the end of the powder removing step to the start of the cooling step in this embodiment was shortened about a half of Example 1.

Moreover, the powder supply vessel was removed after the powder removing step, and immediately used in the next melting step. As described in the above, the productivity of this embodiment was much improved as compared with that of Example 1.

Having now fully described the invention, it will be apparent to one of ordinary skill in the art that many changes and modifications can be made thereto without departing from the spirit or scope of the invention as set forth herein.

15

WHAT IS CLAIMED IS;

1. A powder slush molding method which comprises a melting step of feeding a powder slush material onto a mold surface of a heated slush mold and forming a molten resin film on the mold surface; a powder removing step of removing unmelted powder slush material from the mold surface; a cooling step of cooling the molten resin film to solidify the resin to obtain a film-like molding; and a taking-out step of separating the film-like molding from the mold surface, and is characterized in that between the powder removing step and the cooling step there is provided a heat retaining step of hermetically sealing the opening of the slush mold for a predetermined period of time, allowing the adhered unmelted powder slush to be melted by the remaining heat of the slush mold.

2. A powder slush molding method according to claim 1, wherein said powder removing step is carried out by rocking the slush mold.

3. A powder slush molding method according to claim 1 or 2, wherein in said heat retaining step the hermetic sealing of the opening of said slush mold is effected by a feed material recovering vessel.

4. A powder slush molding method according to claim 1 or 2, wherein in said heat retaining step the hermetically sealing the opening of said slush mold is

16

effected by a cover member.

5. A powder slush molding method according to claim 4, wherein said cover member has heat insulating property.

# FIG.1

HOT AIR

# FIG.2

# FIG.3

# F I G. 4

# F I G. 5

# F I G. 6

Water

FIG.7

FIG.8

FIG.9

**EUROPEAN SEARCH REPORT**

European Patent Office

| Category | DOCUMENTS CONSIDERED TO BE RELEVANT | | EP 86111054.2 |
|---|---|---|---|
| | Citation of document with indication, where appropriate, of relevant passages | Relevant to claim | CLASSIFICATION OF THE APPLICATION (Int. Cl.4) |
| Y | GB - A - 2 123 741 (HONDA)<br>* Totality *<br>-- | 1 | B 29 C 41/08 |
| Y | DE - A - 1 554 784 (MITSUI)<br>* Page 2, lines 6-14 *<br>-- | 1 | |
| A | US - A - 3 607 998 (GOODRICH)<br>* Totality *<br>---- | | |
| | | | **TECHNICAL FIELDS SEARCHED (Int. Cl.4)**<br><br>B 05 D<br>B 29 C |

The present search report has been drawn up for all claims

| Place of search | Date of completion of the search | Examiner |
|---|---|---|
| VIENNA | 14-11-1986 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82